Europäisches Patentamt

European Patent Office

Office européen des brevets

(11) Numéro de publication : **0 097 091**
**B1**

(12) # FASCICULE DE BREVET EUROPÉEN

(45) Date de publication du fascicule du brevet :
**30.09.87**

(51) Int. Cl.⁴ : **B 64 C 27/00**, F 16 F 9/30

(21) Numéro de dépôt : **83401153.8**

(22) Date de dépôt : **07.06.83**

(54) Amortisseur de vibrations et notamment adaptateur de fréquence pour pale d'hélicoptère.

(30) Priorité : **11.06.82 FR 8210198**

(43) Date de publication de la demande :
**28.12.83 Bulletin 83/52**

(45) Mention de la délivrance du brevet :
**30.09.87 Bulletin 87/40**

(84) Etats contractants désignés :
**DE GB IT**

(56) Documents cités :
**FR-A- 2 063 969**
**FR-A- 2 111 845**
**FR-A- 2 242 605**
**FR-A- 2 449 826**
**US-A- 3 361 216**

(73) Titulaire : **VIBRACHOC**
**216 Les Bureaux de la Colline de Saint Cloud**
**F-92213 Saint Cloud (FR)**

(72) Inventeur : **Le Pierres, Gildas**
**Rue des Rochettes D'Huisson Longueville**
**F-91590 La Ferte Alais (FR)**

(74) Mandataire : **Lemoine, Michel et al**
**Cabinet Michel Lemoine 13 Boulevard des Batignolles**
**F-75008 Paris (FR)**

## Description

La présente invention a trait à un amortisseur de vibrations tel que par exemple un adaptateur de fréquence pour pale d'hélicoptère

Il est bien connu d'utiliser, sur les pales de rotor d'hélicoptère, des adaptateurs de fréquence dont les deux extrémités opposées sont solidaires l'une du rotor lui-même, l'autre de la pale à une certaine distance de l'axe du rotor, l'adaptateur s'étendant longitudinalement de façon plus ou moins parallèle à la direction de la pale. L'amortissement nécessaire à l'adaptation de fréquence de vibration s'effectue grâce au travail d'une masse élastomère, travaillant en général au cisaillement et interposée entre les deux éléments métalliques respectivement solidaires du rotor et de la pale. En raison des contraintes sévères dues à l'environnement et du haut degré de fiabilité exigé, le choix du matériau élastomère amortisseur est extrêmement délicat et, dans la pratique, on est conduit à un compromis entre les caractéristiques mécaniques de ce matériau et ses performances dans le domaine de la dissipation, étant entendu que toute augmentation de l'une de ces qualités se traduit par un abaissement d'une autre.

Le brevet US-A-3 361 216 décrit un dispositif d'amortissement hydraulique destiné à être interposé entre des pales d'un rotor d'hélicoptère dans un but d'amortissement. Ce dispositif comporte une enveloppe souple torique interposée entre deux pièces oscillantes pour former des chambres remplies d'un fluide d'amortissement. L'amortissement s'effectue essentiellement au niveau du fluide par un effet de pression, ce qui permet une augmentation de la raideur dynamique peu appropriée à l'adaptateur de fréquence pour pale d'hélicoptère. En outre, la composante élastique est pratiquement négligeable.

La présente invention se propose donc de remédier à ces inconvénients et de fournir un dispositif amortisseur de vibrations, notamment un adaptateur de pale d'hélicoptère, qui présente, en respectant les exigences particulières propres à l'environnement technique et physique, de grandes qualités de résistance mécanique, de longévité et de fiabilité ainsi que des caractéristiques d'amortissement particulièrement élevées et susceptibles en plus d'être facilement réglées et adaptées à des cas différents.

Par rapport au document US-A-3 361 216 qui décrit déjà un dispositif amortisseur de vibrations, du type comprenant un premier élément rigide destiné à être rendu solidaire d'une première pièce telle qu'une pale d'hélicoptère, un deuxième élément rigide destiné à être rendu solidaire d'une seconde pièce telle qu'un rotor d'hélicoptère, une enveloppe élastomère interposée entre lesdits éléments pour se déformer lorsqu'ils se déplacent l'un par rapport à l'autre suivant sensiblement une direction déterminée, et deux chambres dont les volumes varient inversement pendant un tel déplacement en étant réunies l'une à l'autre et étant remplies d'une matière fluide visqueuse telle qu'une graisse ou huile pour provoquer un amortissement lors de l'écoulement de ladite matière d'une chambre vers l'autre par voie d'une pièce de restriction fixée à l'un desdits premier et second éléments, l'invention est caractérisée en ce que le premier élément rigide présente deux parties s'étendant parallèlement et étant écartées l'une de l'autre et pourvues chacune d'un premier passage et d'un second passage, le second élément rigide s'étendant entre les deux parties du premier élément et présentant un moyen de montage dans le premier desdits passages, et un passage oblong dont le plus grand axe est orienté dans la direction de déplacement, ledit passage oblong étant aligné avec le second passage, en ce que l'enveloppe élastomère est constituée d'une masse élastomère interposée entre lesdits éléments rigides et fixée à ceux-ci pour être déformée lors du mouvement relatif entre les éléments, un espace vide oblong étant pratiqué dans la masse élastomère en coïncidence avec le passage oblong dudit second élément, ladite pièce de restriction étant insérée dans ledit espace oblong et possédant deux flasques obturant ledit espace et une partie centrale définissant, dans ledit espace, les deux chambres et des passages étroits faisant communiquer entre elles lesdites chambres, un matériau visqueux remplissant lesdites chambres et lesdits ·passages étroits.

Les revendications 2 à 4 concernent des modes particuliers de réalisation de l'invention.

Un adaptateur de fréquence ainsi conçu permet d'apporter une raideur déterminée et un amortissement déterminé en fonction des fréquences de fonctionnement de la pale en utilisant un élastomère à amortissement interne moindre et ayant des caractéristiques mécaniques accrues. En outre, on obtient une réduction de poids du dispositif et une meilleure tenue en fatigue.

D'autres avantages et caractéristiques de l'invention apparaîtront à la lecture de la description suivante, faite à titre d'exemple non limitatif et se référant au dessin annexé dans lequel :

La figure 1 représente une vue de dessus d'un adaptateur de fréquence selon l'invention ;

La figure 2 représente une vue en coupe longitudinale II-II de cet adaptateur ;

La figure 3 représente une vue en coupe III-III de la partie centrale de l'adaptateur.

La figure 4 représente une vue en coupe IV-IV de la partie centrale de l'adaptateur.

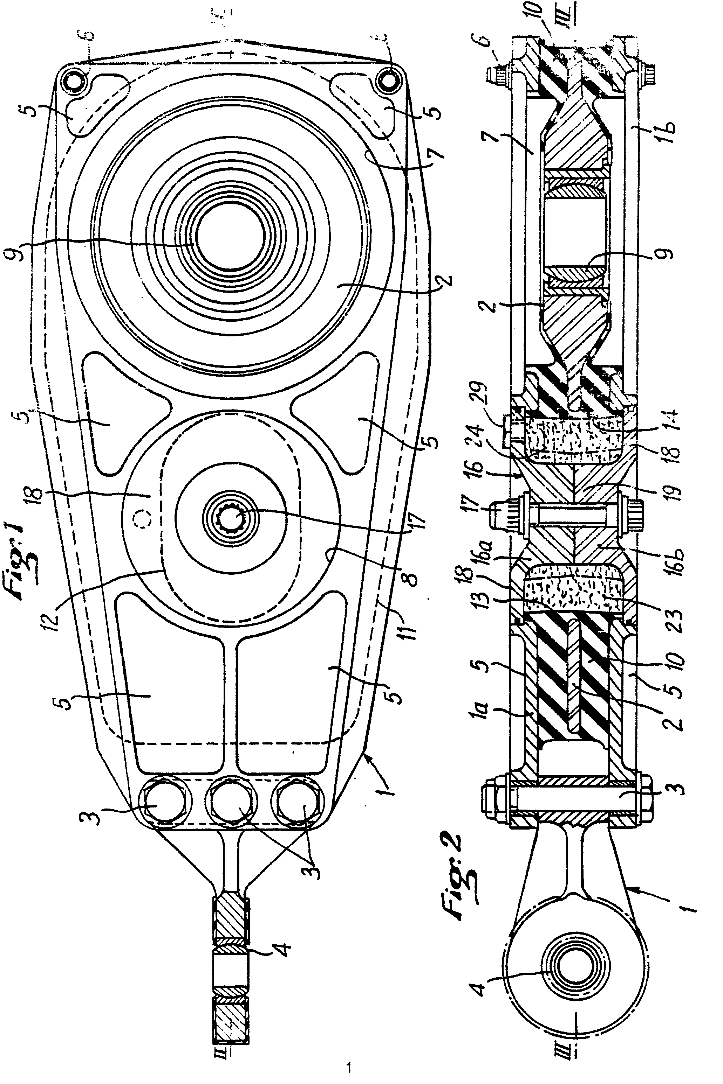

L'adaptateur représenté comporte un premier élément rigide 1 destiné à être relié à une pale d'hélicoptère et un deuxième élément rigide 2 destiné à être rendu solidaire d'un rotor. Les éléments sont réalisés en alliage léger. L'élément 1 est réalisé en deux parties 1a, 1b symétriques par rapport au plan horizontal et dont la forme nervurée est bien vue sur la figure 1. Ces parties d'éléments 1a et 1b s'étendent parallèlement et sont reliées par l'intermédiaire d'une pluralité de boulons 3 à une patte de fixation faisant partie de l'élément 1 et présentant une rotule de montage 4. En dehors des creusures telles que 5, les parties 1a et 1b, reliées l'une à l'autre à l'autre extrémité par des boulons 6, présentent deux passages circulaires, l'un de plus grand diamètre 7 et l'autre de plus petit diamètre 8, centralement disposés.

Entre les deux parties 1a et 1b s'étend l'élément 2 qui présente, au centre du passage 7, une rotule de montage 9 et, au regard du passage 8, un passage oblong dont le plus grand diamètre, orienté le long de l'axe longitudinal II-II est sensiblement égal au diamètre du passage 8 alors que transversalement, la dimension du passage oblong est inférieure au diamètre du passage 8 et juste légèrement supérieure à la dimension transversale de l'espace vide dont il sera fait mention ci-après.

Entre les surfaces en regard des parties 1a, 1b et de l'élément 2, se trouve disposée une masse élastomère 10, adhérisée sur lesdites surfaces et dont on voit le contour périphérique en trait interrompu 11 sur la figure 1. Dans sa partie centrale, la masse élastomère est traversée par un espace vide oblong dont on voit la trace 12 en trait interrompu sur la figure 1. Comme on le constate sur la figure 2, les dimensions de l'espace vide oblong 12 sont légèrement inférieures aux dimensions du passage oblong correspondant de l'élément 2 de sorte que le bord interne de ce passage se trouve partout recouvert par l'élastomère. On voit que l'espace oblong ainsi créé présente deux parois élastomères concaves 13, 14 alignées le long de l'axe longitudinal II-II ou III-III et deux parois transversales 15 sensiblement rectilignes.

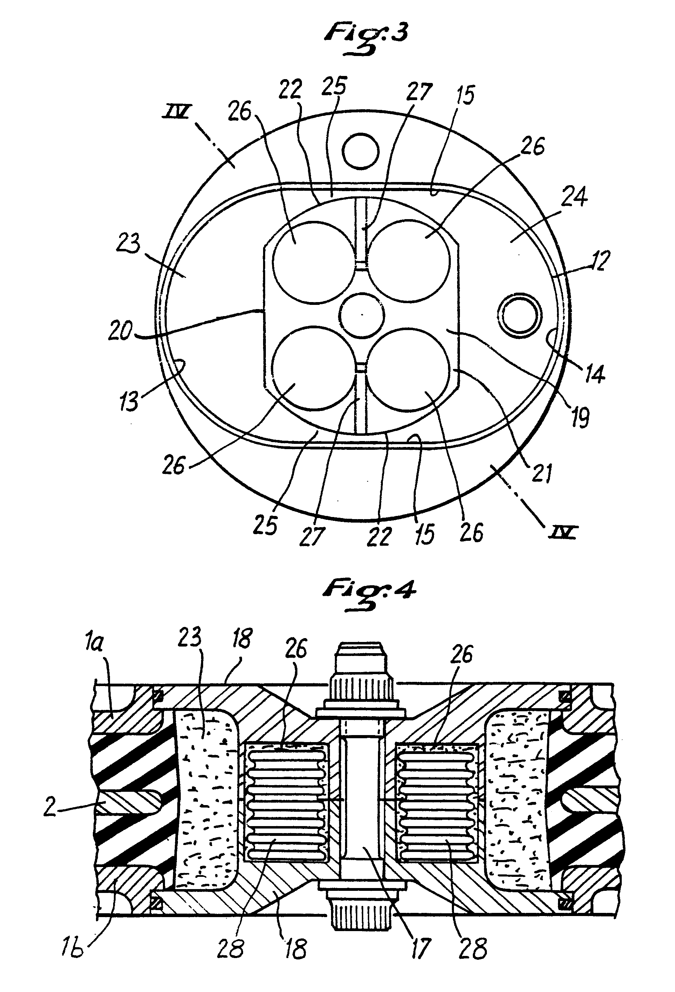

Dans l'espace oblong ainsi réalisé, qui traverse la matière élastomère, se trouve disposée une pièce de restriction 16 constituée en fait de deux moitiés 16a, 16b rassemblées par un boulon central 17. Cette pièce présente deux flasques 18 circulaires qui viennent s'ajuster, avec interposition d'un joint d'étanchéité, dans les deux ouvertures 8 qui se trouvent ainsi obturées de façon étanche, le serrage du boulon assurant une solidarisation parfaite de la pièce 16 et de la pièce 1. La pièce 16 possède une partie centrale cylindrique 19 s'étendant entre les deux flasques 18 et dont la section dans le plan horizontal est bien vue sur la figure 3. Cette section présente deux bords rectiligne 20, 21 orientés vers les parois incurvées 13, 14 et deux bords en arc de cercle 22 orientés vers les parties de parois 15 de l'espace oblong pratiqué dans l'élastomère. On voit que, de cette façon, on a constitué deux chambres 23, 24 de volumes égaux, réunies par deux passages étroits 25.

A l'intérieur de la pièce 16 sont pratiquées quatre chambres internes 26 de forme cylindrique et ne communiquant avec l'extérieur que par deux canaux étroits 27 orientés transversalement, chaque canal 27 débouchant exactement à l'emplacement le plus resserré du passage 25 correspondant et alimentant simultanément deux chambres 26. La majeure partie des chambres 26 est occupée chaque fois par une capsule manométrique 28 dont le volume diminue lorsque la pression qui l'entoure augmente.

Le fonctionnement est le suivant :

Le dispositif selon l'invention est sollicité uniquement selon la direction longitudinale matérialisée par les lignes II-II et III-III sur les figures 2 et 3. En conséquence, lorsque sous l'effet par exemple de vibrations, l'élément interne 2 se déplace vers la droite sur les figures, il entraîne avec lui l'élastomère qui travaille en cisaillement et la paroi 13 vient se rapprocher du bord 20 de la pièce 16 alors que la paroi 14 s'éloigne du bord 19, la diminution de volume de la chambre 23 étant ainsi exactement compensée par l'augmentation de volume de la chambre 24. Sous l'effet de la surpression créée dans la chambre 23 et de la dépression survenant dans la chambre 24, un fluide visqueux, par exemple une huile ou une graisse, qui a été introduit dans l'espace disponible par un passage obturé par un bouchon 29 et qui occupe tout l'espace disponible à l'intérieur des chambres, des passages, canaux et chambres internes, est refoulé hors de la chambre 23 vers la chambre 24 par les passages d'étranglement 25. Il se produit en conséquence un important effet d'amortissement dont les caractéristiques sont déterminées par la viscosité du fluide et les dimensions des passages 25. On peut ainsi se contenter d'utiliser un matériau élastomère présentant des capacités d'amortissement plus réduites et donc une raideur supérieure et des caractéristiques mécaniques accrues notamment du point de vue de la résistance mécanique, tout en complétant l'amortissement nécessaire pour l'adaptation de fréquence de vibration de pale aux valeurs souhaitées. En cas de variations de température, par exemple d'augmentation de température, la dilatation du fluide est encaissée et compensée par la diminution de volume des capsules manométriques 28, le volume supplémentaire de fluide pénétrant par les canaux 27 dans les chambres internes 26. Cependant, on comprend que, quel que soit le fonctionnement dynamique, la pression lors du déplacement relatif d'un élément par rapport à l'autre, si elle augmente dans une des chambres et diminue dans l'autre, n'est pas pratiquement modifiée dans la partie centrale des passages 25 et donc dans les canaux 27 de sorte que les capsules manométriques ne jouent aucun rôle perturbateur dans le fonctionnement dynamique, se contentant de répondre aux dilatations ou contractions thermiques.

**Revendications**

1. Dispositif amortisseur de vibrations, du type comprenant un premier élément rigide (1) destiné à être rendu solidaire d'une première pièce telle qu'une pale d'hélicoptère, un deuxième élément rigide (2) destiné à être rendu solidaire d'une seconde pièce telle qu'un rotor d'hélicoptère, une enveloppe élastomère (10) interposée entre lesdits éléments (1, 2) pour se déformer lorsqu'ils se déplacent l'un par rapport à l'autre suivant sensiblement une direction déterminée, et deux chambres (23, 24) dont les volumes varient inversement pendant un tel déplacement en étant réunies l'une à l'autre et étant remplies d'une matière fluide visqueuse telle qu'une graisse ou une huile pour provoquer un amortissement lors de l'écoulement de ladite matière d'une chambre vers l'autre par voie d'une pièce de restriction (16) fixée à l'un desdits premier et second éléments (1, 2), caractérisé en ce que le premier élément rigide (1) présente deux parties (1a, 1b) s'étendant parallèlement et étant écartées l'une de l'autre et pourvues chacune d'un premier passage (7) et d'un second passage (8), le second élément rigide (2) s'étendant entre les deux parties du premier élément et présentant un moyen de montage (9) dans le premier desdits passages (7), et un passage oblong dont le plus grand axe est orienté dans la direction de déplacement, ledit passage oblong étant aligné avec le second passage (8), en ce que l'enveloppe élastomère (10) est constituée d'une masse élastomère interposée entre lesdits éléments rigides (1, 2) et fixée à ceux-ci pour être déformée lors du mouvement relatif entre les éléments, un espace vide oblong (12) étant pratiqué dans la masse élastomère en coïncidence avec ledit passage oblong dudit second élément, ladite pièce de restriction (16) étant insérée dans ledit espace oblong (12) et possédant deux flasques (18) obturant ledit espace et une partie centrale (19) définissant, dans ledit espace, les deux chambres (23, 24) et des passages étroits (25) faisant communiquer entre elles lesdites chambres, un matériau visqueux remplissant lesdites chambres et lesdits passages étroits.

2. Dispositif selon la revendication 1, caractérisé en ce que la partie centrale (19) de la pièce de restriction (16) présente une forme cylindrique avec deux côtés en arc de cercle définissant lesdits passages étroits (25) avec les parois en regard de la masse élastomère.

3. Dispositif selon l'une des revendications 1 et 2, caractérisé en ce qu'il comporte des moyens de compensation de dilatation thermique (26, 27, 28).

4. Dispositif selon la revendication 3, caractérisé en ce que lesdits moyens de compensation (26, 27, 28) sont logés à l'intérieur de la pièce de restriction (16) et comportent des canaux (27) débouchant dans l'espace en communication avec le matériau fluide au milieu du ou desdits passages étroits (25).

**Claims**

1. A vibration absorber device of the type comprising a first rigid element (1) adapted to be rigidly connected to a first part such as a helicopter blade, a second rigid element (2) adapted to be rigidly connected to a second part such as a helicopter rotor, an elastomer jacket (10) interposed between said elements (1, 2) to be deformed when they are displaced one in relation to the other substantially in a given direction, and two chambers (23, 24), the volumes of which vary inversely during such a displacement, being connected to one another and being filled with a viscous fluid substance such as grease or oil to cause a damping during the flow of said substance from one chamber to the other via a restriction member (16) fixed to one of said first and second elements (1, 2), characterised in that the first rigid element (1) has two portions (1a, 1b) extending parallel and spaced apart and each provided with a first passage (7) and with a second passage (8), the second rigid element (2) extending between the two portions of the first element and having a mounting means (9) in the first of said passages (7), and an oblong passage, the major axis of which is orientated in the direction of displacement, said oblong passage being aligned with the second passage (8), in that the elastomer jacket (10) consists of an elastomer body interposed between said rigid elements (1, 2) and fixed to these to be deformed on relative movement between the elements, an empty oblong space (12) being formed in the elastomer body in coincidence with said oblong passage of said second element, said restriction member (16) being inserted in said oblong space (12) and having two flanges (18) closing said space and a central portion (19) defining, in said space, the two chambers (23, 24) and narrow passages (25) bringing said chambers into communication with one another, a viscous material filling said chambers and said narrow passages.

2. A device as claimed in claim 1, characterised in that the central portion (19) of the restriction member (16) has a cylindrical shape with two arcuate sides defining said narrow passage (25) with the opposite walls of the elastomer body.

3. A device as claimed in one of the claims 1 and 2, characterised in that it comprises means for compensating for thermal expansion (26, 27, 28).

4. A device as claimed in claim 3, characterised in that said compensating means (26, 27, 28) are housed inside the restriction member (16) and comprise ducts (27) opening into the space in communication with the fluid substance in the middle of said narrow passage or passages (15).

**Patentansprüche**

1. Schwingungsdämpfende Vorrichtung der Bauart umfassend ein erstes starres Element (1), dazu bestimmt, mit einem ersten Teil wie einem Hubschrauberblatt kraftschlüssig verbunden zu werden, ein zweites starres Element (2), dazu bestimmt, mit einem zweiten Teil wie einem Hubschrauberrotor kraftschlüssig verbunden zu werden, eine zwischen den genannten Elementen (1, 2) eingefügte Elastomer-Hülle (10), welche sich verformt, wenn sich jene gegeneinander merklich in einer bestimmten Richtung verschieben, und zwei Kammern (23, 24), deren Volumen während einer derartigen Verschiebung umgekehrt variieren, indem sie vereinigt und mit einem dickflüssigen Fluid wie Fett oder Öl gefüllt werden, um beim Abfließen der genannten Flüssigkeit von einer Kammer zur anderen über ein an einem der genannten ersten und zweiten Elemente (1,2) befestigtes Drosselglied (16) eine Dämpfung herzurufen, dadurch gekennzeichnet, daß das erste starre Element (1) zwei parallele und von einander beabstandete Teile (1a, 1b) aufweist, von welchen jeder mit einem ersten Durchlaß (7) und einem zweiten Durchlaß (8) versehen ist, wobei das zweite starre Element (2) zwischen den beiden Teilen des ersten Elementes liegt und im ersten der genannten Durchlässe (7) eine Montageeinrichtung (9) und einen länglichen Durchlaß aufweist, dessen größte Achse in Verschieberichtung ausgerichtet ist, wobei der längliche Durchlaß mit dem zweiten Durchlaß (8) ausgerichtet ist, daß die Elastomer-Hülle (10) aus einer zwischen den genannten starren Elementen (1, 2) eingefügten elastomeren Masse besteht und an diesen befestigt ist, um während der Relativbewegung zwischen den Elementen verformt zu werden, wobei ein länglicher, sich mit dem genannten länglichen Durchlaß des genannten zweiten Elementes deckender Hohlraum (12) in die elastomere Masse eingebracht ist, wobei das genannte Drosselglied (16) in den genannten länglichen Durchlaß (12) eingebracht ist und zwei Flansche (18) umfaßt, welche den genannten Raum und einen zentralen Teil (19) abschließen, welcher den in dem genannten Raum die beiden Kammern (23, 24) und enge Durchlässe (25) begrenzt, über welche die genannten Kammern miteinander in Verbindung stehen, wobei ein dickflüssiges Fluid die genannten Kammern und die genannten engen Durchlässe füllt.

2. Vorrichtung gemäß Anspruch 1, dadurch gekennzeichnet, daß der zentrale Teil (19) des Drosselgliedes (16) eine zylindrische Form mit zwei kreisbogenförmigen Seiten aufweist, welche die genannten engen Durchlässe (25) mit den der elastomeren Masse gegenüberliegenden Wänden begrenzen.

3. Vorrichtung gemäß einem der Ansprüche 1 und 2, dadurch gekennzeichnet, daß es Wärmedehnungs-Ausgleichsmittel (26, 27, 28) umfaßt.

4. Vorrichtung gemäß Anspruch 3, dadurch gekennzeichnet, daß die genannten Ausgleichsmittel (26, 27, 28) innerhalb des Restriktionsstückes (16) angeordnet sind und Kanäle (27) umfassen, welche in den Raum, der mit dem Fluid in Verbindung steht, in der Mitte des oder der genannten engen Durchlässe (25) münden.

0 097 091

Fig.1

Fig.2

Fig:3

Fig:4